# EUROPEAN PATENT SPECIFICATION

(11) **EP 4 657 831 B1**
(45) Date of publication and mention of the grant of the patent: **02.12.2026**
(21) Application number: 24178334.9
(22) Date of filing: 28.05.2024
(51) Int. Cl.: H04L 67/12, G05B 19/418, G06N 20/00

(54) **A SYSTEM FOR TRANSMITTING AND VERIFYING NON-VERBAL DATA SIGNALS AND A METHOD FOR TRANSMITTING AND VERIFYING NON-VERBAL DATA SIGNALS**
SYSTEM ZUR ÜBERTRAGUNG UND ÜBERPRÜFUNG VON NICHTVERBALEN DATENSIGNALEN UND VERFAHREN ZUR ÜBERTRAGUNG UND ÜBERPRÜFUNG VON NICHTVERBALEN DATENSIGNALEN
SYSTÈME DE TRANSMISSION ET DE VÉRIFICATION DE SIGNAUX DE DONNÉES NON VERBALES ET PROCÉDÉ DE TRANSMISSION ET DE VÉRIFICATION DE SIGNAUX DE DONNÉES NON VERBALES

(43) Date of publication of application: 03.12.2025
(73) Proprietor: Szczepanski, Arkadiusz, 80-460 Gdansk Pomerania (PL)
(72) Inventor: Szczepanski, Arkadiusz, 80-460 Gdansk (PL); Rzepecki, Jakub, 80-297 Rebiechowo (PL)

(56) References cited:
- US-A1- 2022 404 808
- US-A1- 2023 362 315
- US-B1- 11 131 986

## Description

The present invention relates to a system for transmitting and verifying non-verbal data signals and a method for transmitting and verifying non-verbal data, applicable in the transmission of digital information.

The reliability of information and an accessible way of representing it are very important nowadays. Effective non-verbal transfer of status information about production processes and hazardous situations ensures reliability and safety. Very often, during communication in emergency situations and when processing everyday input data in a dynamic way, fails the so-called 'human factor'. The language barrier, stress or fatigue contribute to a wrong interpretation of the situation or a complete lack of information about the current status of the technological and production process.

From the patent description EP0552769B1 there is a known solution concerning a multi-channel communication system with many sensor devices connected by a two-wire path in a seismic steam cable. The communication means in each sensor may receive first message signals on the outgoing signal channel and transmit second channel signals on the incoming signal channel, where the outgoing and incoming channels are different.

Patent application CN115576277A discloses a data abnormality monitoring system for precision processing, including a data monitoring module, a data transmission module, a data collection module, a data preprocessing module, a data configuration module, a data analysis module, a data management module, a data security module, a data storage and a data anomaly module, where each parameter is checked using an industrial camera and then sends the data to the monitoring system, where the provided data is compared and analyzed. Information about parameters that do not meet the requirements is sent to the integration module and the appropriate device.

Patent application KR2023040474A discloses, a system for measuring information about the environment of ship pipelines using a sensor module supporting a wireless network is known. The system concerns in particular the measurement of temperature values, pressure values and vibration values in pipes connected to devices on the ship. Information collection involves measuring in real time the condition of equipment during ship operation by building large data sets about the condition of equipment and facilities inside the ship. In a ship's pipeline environmental information measurement system, a sensor unit installed on one side of the pipeline connected to the equipment on the ship measures the pipeline environment information inside the pipeline, the sensor module containing a wireless transmission unit outputs the pipe environment information measured by the sensor unit in the form of a digital signal and wireless communication with an external network, the gateway allows the wireless transmission unit to access the network and transmit information about the pipe environment, and the data transmission module receives information about the pipe environment transmitted by the gateway, the computing module analyzes the information about the pipe environment and predicts the status of the equipment, the storage module stores information about pipeline environment and the condition of the server collecting and storing information about the vessel.

Prior art document US2023362315A1 discloses a cloud-based live video production system in which a cloud server receives multiple camera video signals, generates/transmits a main line video signal, and remotely controls cameras, including via wireless/5G communication.

The present disclosure is related to an invention which is a system for transmitting and verifying non-verbal data signals, including a command and control unit comprising operational memory and a control software that reads and sends data signals, a database server that receives, records, catalogs and transmits non-verbal data signals, a security server that records the signals. data, an external data service providing external data to the database server, a vision processing module processing the received images and transmitting data from the processed images, a historical station for reading historical process events and a receiving module reading parameters from the database server and transmitting a signal to the parameter display, characterized in that the system has two independent equivalent signal circuits processing the main data signal and the additional data signal, respectively, where the main data signal includes three components coming from the command and control unit, the external data service and the visual processing module, and the additional data signal includes three components coming from command and control unit, external data service and visual processing module. The system includes an artificial intelligence module for logical processing of data from the database server, the security server and the vision processing module. Thanks to the present invention, it is possible to effectively transmit status information about production processes or emergency situations in a non-verbal way. Individual devices operate in an integral system as a system in which each element has a key and precisely defined role. Information is transmitting uninterrupted, secure and reliable. Two circuits ensure the stability of the system, where any dysfunction of one of the circuits does not exclude the possibility of using the system continuously. The artificial intelligence module processes parameters, which ensures their automatic update.

Preferably, the external data service includes a main external data service and an additional external data service.

Preferably, the main data signal and the additional data signal are transmitted from the historical station to an external data recipient. An external data recipient is an external data user (external client) for the historical station module, which can receive data and display it in a way that allows for the correct interpretation of the historical data.

The present disclosure is also related to an invention which is a method for transmitting and verifying non-verbal data signals, which involves using a system for transmitting and verifying non-verbal data signals, including a command and control unit comprising operational memory and a control software that reads and sends data signals, a database server that receives and saves, cataloging and transmitting non-verbal data signals, a security server recording data signals, an external data service providing external data to the database server, a vision processing module processing received images and transmitting data from processed images, a historical station for reading historical process events and a receiving module reading parameters from the database server and transmitting the signal to the parameter display, where two independent equivalent signal circuits are used, respectively, processing the main data signal including three components coming from the command and control unit, the external data service and the vision processing module, and an additional data signal including three components coming from respectively from the command and control unit, external data service and vision processing module, where the main data signal has a higher priority and priority of application than the additional data signal and an artificial intelligence module is used for logical processing of data coming from the database server, the security server and from the vision processing module.

Preferably, the external data service includes a main external data service and an additional external data service.

Preferably, the main data signal and the additional data signal are transmitted from the historical station to an external data recipient.

Invention in its embodiments is shown in the drawing, wherein:
Fig. 1 shows a block diagram of a system for transmitting and verifying non-verbal data signals.
Fig. 2 shows a block diagram of the main signal circuit.
Fig. 3 shows a block diagram of an additional signal circuit.

Description of the symbols in the drawings:
1 system for transmitting and verifying non-verbal data signals
2 command and control unit
3 database server
4 security server
5 external data service
6 vision processing module
7 historical station
8 receiving module
9 parameter display
10 artificial intelligence module
11 main signal circuit
12 additional signal circuit
13 main data signal
14 additional data signal
15 main external data service
16 additional external data service
17 external data recipient
x1 the first component of the main data signal
x2 the second component of the main data signal
x3 third component of the main data signal
y1 the first component of the additional data signal
y2 the second component of the additional data signal
y3 third component of the additional data signal

### Example 1

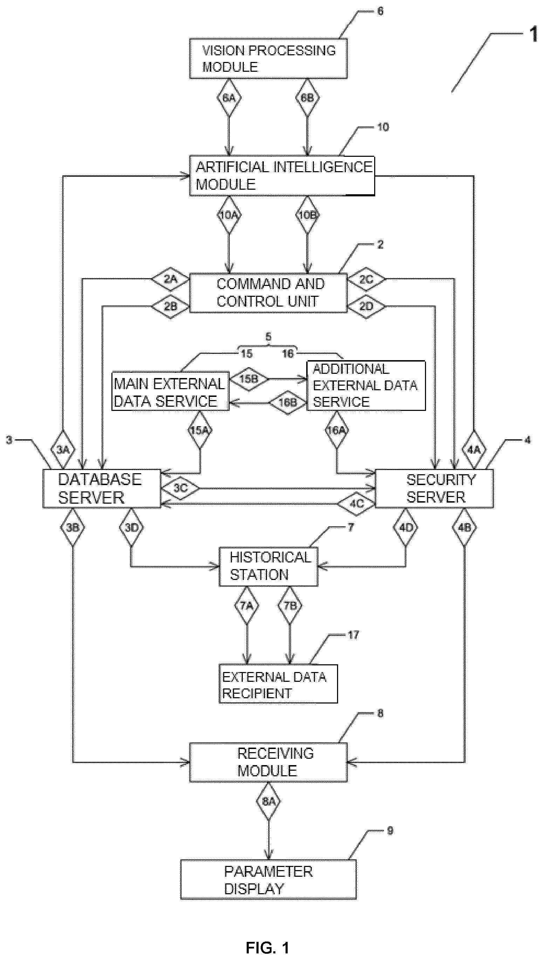

A system for transmitting and verifying non-verbal data signals 1, shown in Fig. 1, comprising a command and control unit 2 including operational memory and a control software, a database server 3, a security server 4, an external data service 5, a vision processing module 6, a station historical module 7, receiving module 8.

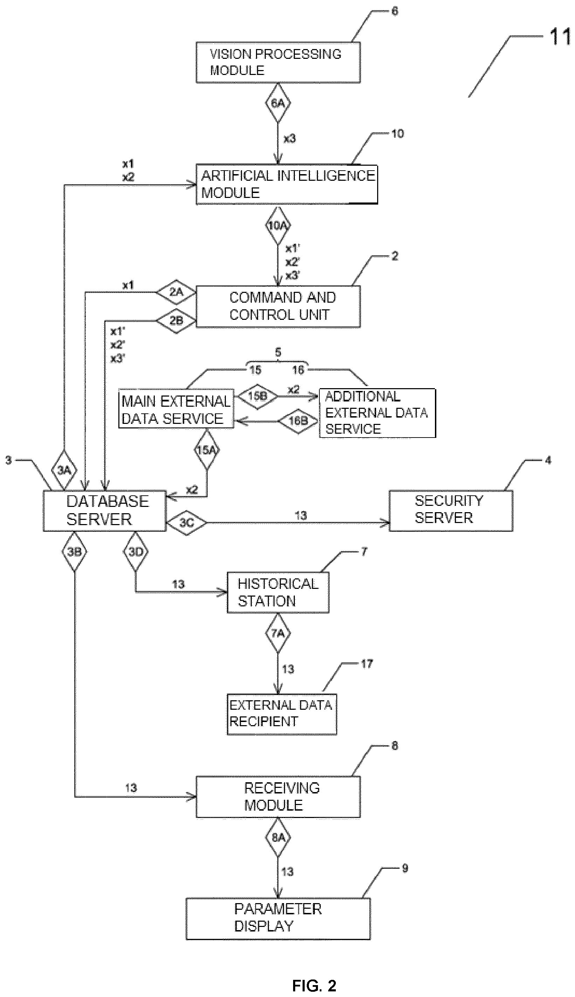

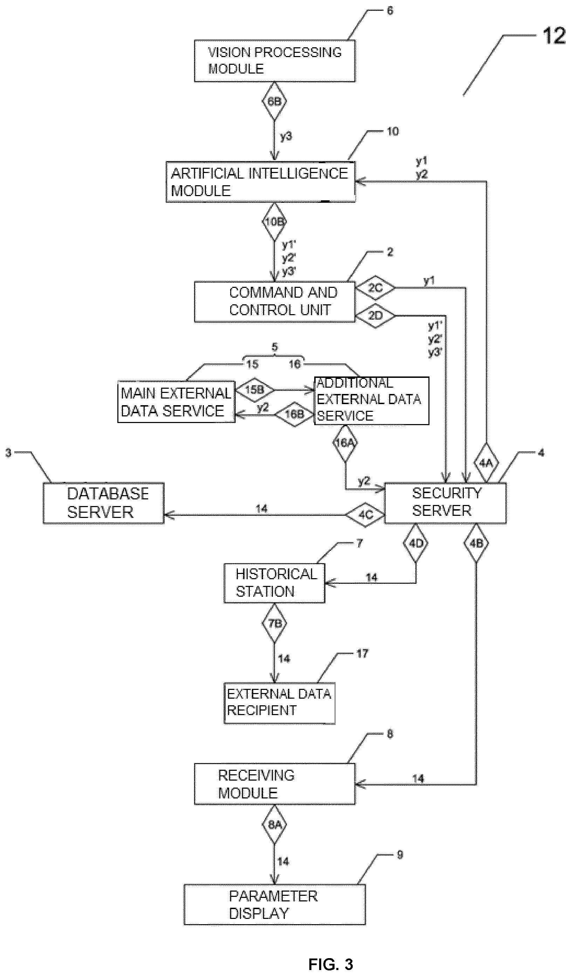

The system 1 has two independent equivalent signal circuits - the main signal circuit 11 and the additional signal circuit 12, processing the main data signal 13 and the additional data signal 14, respectively. The main data signal 13 includes three components x1, x2, x3 coming from the command and control unit 2, the external data service 5 and the vision processing module 6 (Fig. 2). The additional data signal 14 also includes three components y1, y2, y3 coming from the command and control unit 2, the external data service 5 and the vision processing module 6 (Fig. 3). System 1 comprising an artificial intelligence module 10.

The command and control unit 2 comprising operational memory and a control software through which it sends operating parameters set by the operator in the form of data to the database server 3 and in parallel to the security server 3. Command and control unit 2 is the only element enabling operator interaction. The analog input data of the control unit 2 are based on the exclusive intervention of the operator and do not require automatic control via any sensors or other automatic systems. Simultaneously to the analog input data entered by the operator, the command and control unit 2 receives a digital signal from the vision processing module 6, which is previously processed by the artificial intelligence module 10 using specially designed functional blocks. One-way signal transmission from the command and control unit 2 to the database server 3 and to the security server 4 takes place via WAN, LAN or WLAN.

The database server 3 is an integral component of the system 1. Its architecture is based on Linux with a dedicated software. Database server 3 stores all collected parameters in the form of data and allows the data to be stored for a specified period of time. Database server 3 is a device with a built-in permanent memory medium. Bidirectional communication with the database server 3 takes place via WAN, LAN and WLAN.

The security server 4 is a computer device that performs data security tasks necessary for the failure-free and lossless operation of the entire system 1. It automatically allows for the recovery and redirection of current information about the entire process. It is a security solution for the absence of a signal from the command and control unit 2 and the external data service 5. Bidirectional communication with the security server 4 takes place via WAN, LAN and WLAN.

The historical station 7 is a shared computer device based on the Linux architecture, equipped with SSD mass memory, WAN, LAN and WLAN connectors and an independent power supply. The historical station 7 ensures independent operation of the main signal circuit 12 in relation to the additional signal circuit 13. It is a computer device designed to collect all historical data of the entire process, enabling their reconstruction for control or preventive purposes. Bidirectional communication with the data server 3 takes place via WAN, LAN and WLAN. The historical station 7 is an independent device responsible for faithful reproduction of all information sent from the command and control unit 2 and contained and stored in the database server 3. Historical station 7 performs the function of monitoring and storing all history events, which is a key technical solution for the reconstruction of any event or performing audits. The historical station 7 is designed in such a way that it is possible to connect an external data recipient 17, whose permanent connection is not necessary for the entire system.

The main external data service 15 is the primary device of the system, operating in the circulation of the main data signal 13, based on Linux architecture, equipped with SSD mass memory, WAN, LAN and WLAN connectors and an independent power supply. It is a computer device enabling access to external sites and services used to update the process database regardless of the command and control unit 2. It ensures the continuity of the updated data signal delivered to the database server 3 regardless of the command and control unit 2. The main external data service 15 enables the delivery external data to system 1 and is necessary to update and correct input data initiated by the command and control unit 2. One-way signal transmission from the external data service 15 to the database server 3 takes place via WAN, LAN or WLAN.

The additional external data service 16 is a device operating in the circuit of the additional data signal 14. It is a secondary device of the system, based on the Linux architecture, equipped with SSD mass memory, a WAN, LAN and WLAN connector and an independent power supply. It is a computer device that allows access to external sites and services used to update the process database, regardless of the command and control unit 2. It ensures the continuity of the updated data signal delivered to the database server 3, regardless of the command and control unit 2. It enables the delivery of external data to the system 1 and is necessary to update and correct the input data initiated by the command and control unit 2. One-way signal transmission from the additional external data service to the database server 3 takes place via WAN, LAN or WLAN.

The vision processing module 6 is a shared computer-optical device operating in the Linux architecture, including SSD mass memory, WAN, LAN and WLAN connectors and independent power supply. The vision processing module 6 has been integrated with both the surveillance camera and the virtual and augmented reality system. The vision processing module 6 enables fast image processing, motion detection and tracking, and object recognition and identification. Additionally, it is used to render images in real time. All tasks performed by the vision processing module 6 contribute to the effective use of vision data, improving image quality and ensuring precision in the interactions of the system operator through the command and control unit 2.

The artificial intelligence module 10 is a shared computer device of the system, based on the Linux architecture, including SSD mass memory, WAN, LAN and WLAN connectors and an independent power supply. The artificial intelligence module 10 guarantees full autonomy for key components of the entire system and forecast the possibility of failure. The artificial intelligence module 10 is programmed to process all tasks and determine their correctness and suggest other solutions, and is based on designed neural networks and logic gates. The artificial intelligence module 10 operates independently of the historical station 4 and is a separate device that responds dynamically to the received data signals. The input data for the artificial intelligence module 10 comes from the database server 3, the security server 4 and the vision processing module 6 needed to perform the comparison processes.

The receiving module 8 is a shared and primary device of the system. It is a computer device equipped with SSD memory and independent power supply. Its structure is based on the Linux system with a dedicated software that enables data transmission via a computer network interface and a multimedia interface designed for high-resolution data transmission and the BLUETOUTH wireless communication interface. The receiving module 8 is designed to read parameters from the database server 3 and the security server 4 and transmit a high-resolution signal to the dedicated parameter display 9. It is an integral device with system 1 and can be cascaded together with the parameter display 9. This allows for unlimited mobility for all required reception points. The parameter display 9 is a shared and primary device of system 1. It works in high resolution technology, i.e. TVs, monitors, screens, projectors, etc., and is equipped with an independent power supply. It enables data transmission from the receiving module 8 through a multimedia interface designed for high-resolution data transmission and the BLUETOUTH wireless communication interface. The parameter display 9 interacts closely with the receiving module 8 and together with it provides the possibility of unlimited mobility for all required receiving points.

### Example 2

The method of transmitting and verifying the non-verbal data signal consists in using a system for transmitting and verifying non-verbal data signals 1 comprising a command and control unit 2 including operational memory and a control software that reads and sends data signals, a database server 3 receiving, recording, cataloging and transmitting non-verbal data signals, a security server 4 recording data signals, an external data service 5 providing external data to the database server 3, a vision processing module 6 processing the received images and transmitting data from the processed images, a historical station 7 for reading historical process events and a receiving module 8 reading parameters from the database server 3 and transmitting the signal to the parameter display 9. The course of data signals in the system 1 is divided into two independent and at the same time an equivalent (redundant) signal circuits 11, 12. They divide the system into devices operating in the circuit main signal 11, the so-called prime devices and devices operating in the additional signal circuit 12, the so-called secondary devices where the main data signal 13 has higher priority and priority of application.

A main data signal 13 flow is shown in Fig. 2. The main signal 13 is a computer recording of digital and analog data and contains three components. The first component x1,x1' comes from the command and control unit 2, the second component x2,x2' comes from the main external data service 15, the third component x3,x3' comes from the vision processing module 6. Analog parameters are introduced to the command and control unit 2 manually, and then are converted into a computer record in the form of the first component x1 of the main data signal 13, which is the most important component of the main data signal 13.

The first component x1 of the main data signal comes from the command and control unit 2 through the first signal output 2A towards the server database 3. Then, the database server 3 receives, saves and catalogs the digital data and sends it simultaneously via output 3C towards the security server 4, output 3D towards the historical station 4 and output 3A towards an artificial intelligence module 10. From the historical station 4, the first component x1 of the main data signal is sent via output 4A towards an external data recipient 17. In the artificial intelligence module 10, the first component x1 of the main data signal 13 is subjected to a logical processing process that is consistent with the designed purpose of this module. The artificial intelligence module 10 improves the signal based on the principles of data filtration and cleaning, interpolation, reconstruction, data enhancement. After such signal processing, the processed first component x1' of the main data signal 13 is obtained, which is sent through the output 10A towards the command and control unit 2 for confirmation by the operator, and then the processed first component x1' of the main data signal 13 is sent towards the database server 3 with the second signal output 2B to achieve process continuity and uninterrupted and dynamic improvement of the data signal. The database server 3, after receiving the processed first component x1' of the main data signal 13 from the command and control unit 2, saves and catalogs the digital data and the processed first component x1' of the main data signal 13 is sent through outputs 3C, 3A and 3D, where it repeats its operation in accordance with the above description and is additionally sent via output 3B towards the receiving module 8. In the receiving module 8, the processed first component x1' is properly decoded and interpreted. Next, a high-resolution signal is sent from the receiving module 8 via output 8A to the parameter display 9, where, after processing, the signal is converted into a visual image and presented in the form of an analog non-verbal message.

The second component x2 of the main data signal 13 comes from the main external data service 15. When the operator of the system 1 initiates the operation of the command and control unit 2 by physically turning it on, the main external data service 15 initiates its operation and downloads the necessary data from the additional external data service 16 entrance 16B. The main external data service 15 sends the second component x2 of the main data signal 13 through the output 15B towards the additional external data service 16, where it is temporarily backed up to ensure full system redundancy. Additionally, the second component x2 of the main data signal 13 is sent from the main external data service via output 15A towards the database server 3, where the further process takes place in accordance with the course of the first component x1 of the main data signal 13.

The third component x3 of the main data signal 13 is in the form of digital data coming from the vision processing module 6. The operator of the system 1, by initiating the operation of the command and control unit 2 by physically turning it on, simultaneously initiates the operation of the vision processing module 6. The vision processing module 6 receives data in the form computer images using external analog sensors for non-verbal data. After completing processing based on executive modules responsible for image calibration, color format conversion, image normalization, noise reduction, motion detection and tracking, object recognition and 3D rendering, the vision processing module 6 sends the third component x3 of the main data signal 13 via output 6A towards to the artificial intelligence module 10, where the third component x3 of the main signal 13 is processed and as the processed third component x3' is sent through the output 10A towards the command and control unit 2 and is further transmitted as the first component x1 of the main signal 13.

In the event that the main data signal 13 is unavailable, an additional data signal 14 takes priority for the system 1 and becomes necessary for the operation of the system 1. The additional data signal 14 runs throughout the system 1 through shared and secondary devices of the system, independently of the prime devices, intended for the waveform of the main data signal 13. The additional data signal 14 includes a first component y1,y1' of the additional data signal 14, a second component y2,y2' of the additional data signal 14 and a third component y3,y3' of the additional data signal 14.

The first component y1,y1' comes from the command and control unit 2. Analog parameters are entered manually by the operator into the command and control unit 2 and then converted into a digital computer record in the form of the first component y1 of the additional data signal 14. The first component y1 comes out from the command and control unit - control signal output 2C towards the security server 4. Then, after receiving the first component y1, the security server 4 saves and catalogs the digital data, and then simultaneously sends the first component y1 through the output 4C towards the database server 3, through the output 4D towards to the historical station 7 and output 4A towards the artificial intelligence module 10. In the database server 3, the first component y1 of the additional data signal 14 is saved and cataloged to maintain the redundancy of the system 1. From the historical station 4, the first component y1 of the additional data signal 14 is sent to external data recipient 17. In the artificial intelligence module 10, the first component y1 of the additional data signal 14 is subjected to a logical processing process and corrected based on the principles of filtration and data cleaning, interpolation and reconstruction, and data amplification. The first processed component y1' of the additional data signal 14 is obtained and sent via output 10B towards the command and control unit 2 for confirmation by the operator. The processed first component y1' of the additional data signal 14 is sent towards the security server 4 via the 2D signal output in order to achieve process continuity and uninterrupted and dynamic signal improvement. The security server 4, after receiving the processed first component y1' of the additional data signal 14, saves and catalogs it, and then sends it via outputs 4C, 4A and 4D, where the processed first component y1' of the additional data signal 14 repeats its operation in accordance with the above description and additionally is sent via output 4B to the receiving module 8, where it is appropriately decoded and interpreted. The receiving module 8, through the output 8A, sends the processed first component y1' of the additional signal 14 towards the parameter display 9, where, after processing, it is transformed into a visual image and presented in the form of an analog message.

The second component y2 of the additional data signal 14 is in the form of digital input data and is transmitted from the additional external data service 16, which receives data from the direction of the main external data service 15 and then sends a signal via output 16B towards the main external data service 15, where the second the y2 component of the additional signal 14 is temporarily stored to provide system redundancy. Additionally, the second component y2 of the additional data signal 14 is sent via output 16A towards the security server 4, where the further process is carried out in accordance with the first component y1 of the additional data signal 14.

The third component y3 of the additional data signal 14 is in the form of digital data and is transmitted from the vision processing module 6, which acquires the data in the form of computer images using analog external non-verbal data sensors. After completed processing based on executive modules responsible for image calibration, color format conversion, image normalization, noise reduction, motion detection and tracking, object recognition and 3D rendering, the vision processing module 6 sends the measurement results in the form of the third component y3 of the additional data signal 14 output 6B towards the artificial intelligence module 10, where the third component y3 of the additional data signal 14 is processed and as the processed third component y3' of the additional signal 14 is sent via output 10B towards the command and control unit 2 and continues in the same way as the processed first y1' component of additional data signal 14.

The system for transmitting and verifying the non-verbal data signal according to the present invention minimizes the time needed to react in emergency situations such as: flooding, fire, explosion, escape from a ship or other vessel. People react very quickly to information presented in graphic form. However, all information provided through subtitles is omitted in stressful situations.

The solution is applicable to maritime units where communication for the purpose of carrying out a project or operation is a key factor influencing work efficiency. The system is a complement to verbal communication, the use of which eliminates problems with stress when transferring statuses to the place where such status is required, eliminates problems related to the language barrier, saves time and money for the project owner or the unit performing the work, overlaps with the requirements and standards maritime industry regarding safety. This solution is intended to provide an additional source of information that is completely independent of any other communication system.

The reliability of information and the way it is represented is a key solution for this invention, which consists of both an artificial intelligence module and a dedicated image reading technique. The stability of the system is guaranteed by solving the system on the basis of doubled and simultaneous operation of the entire system. Any interference and/or dysfunction in one of the circuits does not exclude the possibility of using the system and it fulfills its purpose continuously and uninterrupted.

## Claims

1. A system for transmitting and verifying non-verbal data signals (1) comprising:
- a command and control unit (2) including operational memory and a control software as well as reading and sending data signals;
- a database server (3) receiving, recording, cataloging and transmitting non-verbal data signals;
- a security server (4) recording data signals;
- an external data service (5) providing external data to the database server (3);
- a vision processing module (6) processing the received images and transmitting data from the processed images;
- a historical station (7) for reading historical process events and
- a receiving module (8) reading parameters from the database server (3) and transmitting a signal to a parameter display (9),
**characterized in that**
- the system (1) has two independent equivalent signal circuits: the main signal circuit (11) and the additional signal circuit (12), processing a main data signal (13) and an additional data signal (14), respectively, wherein:
- the main data signal (13) including three components (x1, x2, x3) coming from the command and control unit (2), the external data service (5) and the vision processing module (6) and
- the additional data signal (14) including three components (y1, y2, y3) coming from the command and control unit (2), the external data service (5) and the vision processing module (6) and
- the system (1) includes an artificial intelligence module (10) for logical processing of data coming from the database server (3), the security server (4) and the vision processing module (6).

2. The system (1) according to claim 1, **characterized in that** the external data service (5) comprising:
- a main external data service (15) and
- an additional external data service (16).

3. The system according to claims 1 or 2, **characterized in that** the main data signal (13) and the additional data signal (14) are transmitted from the historical station (7) to an external data receiver (17).

4. A method for transmitting and verifying non-verbal data signals, using a system for transmitting and verifying non-verbal data signals (1) comprising:
- a command and control unit (2) including operational memory and a control software as well as reading and sending data signals;
- a database server (3) receiving, recording, cataloging and transmitting non-verbal data signals;
- a security server (4) recording data signals;
- an external data service (5) providing external data to the database server (3);
- a vision processing module (6) processing the received images and transmitting data from the processed images;
- a historical station (7) for readings of historical process events and
- a receiving module (8) reading parameters from the database server (3) and transmitting a signal to a parameter display (9), wherein:
- the system (1) has two independent equivalent signal circuits (11, 12) processing respectively:
- a main data signal (13) including three components (x1, x2, x3) coming from the command and control unit (2), the external data service (5) and the vision processing module (6), respectively and
- an additional data signal (14) including three components (y1, y2, y3) coming from the command and control unit (2), the external data service (5) and the vision processing module (6), respectively, wherein
- the main data signal (13) has a higher priority and priority of use than the additional data signal (14), and
- an artificial intelligence module (10) is used to logically process data coming from the database server (3), from the security server (4) and from the vision processing module (6).

5. The method according to claim 4, **characterized in that** the external data service (5) comprising:
- a main external data service (15) and
- an additional external data service (16).

6. The method according to claims 4 or 5, **characterized in that** the main data signal (13) and the additional data signal (14) are transmitted from the historical station (7) to an external data recipient (17).

## Patentansprüche

1. System zum Übertragen und Verifizieren nonverbaler Datensignale (1), umfassend:
- eine Befehls- und Steuereinheit (2), die einen Arbeitsspeicher und eine Steuersoftware umfasst und zum Lesen und Senden von Datensignalen eingerichtet ist;
- einen Datenbankserver (3), der zum Empfangen, Aufzeichnen, Katalogisieren und Übertragen nonverbaler Datensignale eingerichtet ist;
- einen Sicherheitsserver (4), der zum Aufzeichnen von Datensignalen eingerichtet ist;
- einen externen Datendienst (5), der dem Datenbankserver (3) externe Daten bereitstellt;
- ein Bildverarbeitungsmodul (6), das zum Verarbeiten der empfangenen Bilder und zum Übertragen von Daten aus den verarbeiteten Bildern eingerichtet ist;
- eine Historienstation (7) zum Lesen historischer Prozessereignisse; und
- ein Empfangsmodul (8), das zum Lesen von Parametern aus dem Datenbankserver (3) und zum Übertragen eines Signals an eine Parameteranzeige (9) eingerichtet ist, **dadurch gekennzeichnet, dass**
- das System (1) zwei unabhängige, gleichwertige Signalkreise aufweist: einen Hauptsignalkreis (11), der das Hauptdatensignal (13) verarbeitet, und einen zusätzlichen Signalkreis (12), der das zusätzliche Datensignal (14) verarbeitet, wobei:
- das Hauptdatensignal (13) drei Komponenten (x1, x2, x3) umfasst, die von der Befehls- und Steuereinheit (2), dem externen Datendienst (5) und dem Bildverarbeitungsmodul (6) stammen; und
- das zusätzliche Datensignal (14) drei Komponenten (y1, y2, y3) umfasst, die von der Befehls- und Steuereinheit (2), dem externen Datendienst (5) und dem Bildverarbeitungsmodul (6) stammen; und
- das System (1) ein Modul für künstliche Intelligenz (10) zur logischen Verarbeitung von Daten umfasst, die vom Datenbankserver (3), vom Sicherheitsserver (4) und vom Bildverarbeitungsmodul (6) stammen.

2. System (1) nach Anspruch 1, **dadurch gekennzeichnet, dass** der externe Datendienst (5) Folgendes umfasst:
- einen externen Hauptdatendienst (15); und
- einen zusätzlichen externen Datendienst (16).

3. System nach Anspruch 1 oder 2, **dadurch gekennzeichnet, dass** das Hauptdatensignal (13) und das zusätzliche Datensignal (14) von der Historienstation (7) an einen externen Datenempfänger (17) übertragen werden.

4. Verfahren zum Übertragen und Verifizieren nonverbaler Datensignale unter Verwendung eines Systems zum Übertragen und Verifizieren nonverbaler Datensignale (1), das Folgendes umfasst:
- eine Befehls- und Steuereinheit (2), die einen Arbeitsspeicher und eine Steuersoftware umfasst und zum Lesen und Senden von Datensignalen eingerichtet ist;
- einen Datenbankserver (3), der zum Empfangen, Aufzeichnen, Katalogisieren und Übertragen nonverbaler Datensignale eingerichtet ist;
- einen Sicherheitsserver (4), der zum Aufzeichnen von Datensignalen eingerichtet ist;
- einen externen Datendienst (5), der dem Datenbankserver (3) externe Daten bereitstellt;
- ein Bildverarbeitungsmodul (6), das zum Verarbeiten der empfangenen Bilder und zum Übertragen von Daten aus den verarbeiteten Bildern eingerichtet ist;
- eine Historienstation (7) zum Lesen historischer Prozessereignisse; und
- ein Empfangsmodul (8), das zum Lesen von Parametern aus dem Datenbankserver (3) und zum Übertragen eines Signals an eine Parameteranzeige (9) eingerichtet ist, wobei:
- das System (1) zwei unabhängige, gleichwertige Signalkreise (11, 12) aufweist, die jeweils das Hauptdatensignal (13) bzw. das zusätzliche Datensignal (14) verarbeiten;
- das Hauptdatensignal (13) drei Komponenten (x1, x2, x3) umfasst, die in dieser Reihenfolge von der Befehls- und Steuereinheit (2), dem externen Datendienst (5) und dem Bildverarbeitungsmodul (6) stammen; und
- das zusätzliche Datensignal (14) drei Komponenten (y1, y2, y3) umfasst, die in dieser Reihenfolge von der Befehls- und Steuereinheit (2), dem externen Datendienst (5) und dem Bildverarbeitungsmodul (6) stammen, wobei
- das Hauptdatensignal (13) gegenüber dem zusätzlichen Datensignal (14) eine höhere Priorität und einen höheren Vorrang bei der Verwendung aufweist; und
- ein Modul für künstliche Intelligenz (10) zur logischen Verarbeitung von Daten verwendet wird, die vom Datenbankserver (3), vom Sicherheitsserver (4) und vom Bildverarbeitungsmodul (6) stammen.

5. Verfahren nach Anspruch 4, **dadurch gekennzeichnet, dass** der externe Datendienst (5) Folgendes umfasst:
- einen externen Hauptdatendienst (15); und
- einen zusätzlichen externen Datendienst (16).

6. Verfahren nach Anspruch 4 oder 5, **dadurch gekennzeichnet, dass** das Hauptdatensignal (13) und das zusätzliche Datensignal (14) von der Historienstation (7) an einen externen Datenempfänger (17) übertragen werden.

## Revendications

1. Système de transmission et de vérification de signaux de données non verbaux (1), comprenant :
- une unité de commande et de contrôle (2), comprenant une mémoire de travail et un logiciel de commande et configurée pour lire et envoyer des signaux de données ;
- un serveur de base de données (3), configuré pour recevoir, enregistrer, cataloguer et transmettre des signaux de données non verbaux ;
- un serveur de sécurité (4), configuré pour enregistrer des signaux de données ;
- un service de données externe (5), configuré pour fournir des données externes au serveur de base de données (3) ;
- un module de traitement d'images (6), configuré pour traiter les images reçues et transmettre des données issues des images traitées ;
- une station d'historisation (7) destinée à lire des événements historiques du processus ; et
- un module de réception (8), configuré pour lire des paramètres à partir du serveur de base de données (3) et transmettre un signal à un afficheur de paramètres (9),
**caractérisé en ce que**
- le système (1) comporte deux circuits de signal indépendants et équivalents : un circuit de signal principal (11), qui traite le signal de données principal (13), et un circuit de signal supplémentaire (12), qui traite le signal de données supplémentaire (14), dans lequel :
- le signal de données principal (13) comprend trois composantes (x1, x2, x3) provenant de l'unité de commande et de contrôle (2), du service de données externe (5) et du module de traitement d'images (6) ; et
- le signal de données supplémentaire (14) comprend trois composantes (y1, y2, y3) provenant de l'unité de commande et de contrôle (2), du service de données externe (5) et du module de traitement d'images (6) ; et
- le système (1) comprend un module d'intelligence artificielle (10) destiné au traitement logique de données provenant du serveur de base de données (3), du serveur de sécurité (4) et du module de traitement d'images (6).

2. Système (1) selon la revendication 1, **caractérisé en ce que** le service de données externe (5) comprend :
- un service de données externe principal (15) ; et
- un service de données externe supplémentaire (16).

3. Système selon la revendication 1 ou 2, **caractérisé en ce que** le signal de données principal (13) et le signal de données supplémentaire (14) sont transmis depuis la station d'historisation (7) vers un récepteur externe de données (17).

4. Procédé de transmission et de vérification de signaux de données non verbaux, utilisant un système de transmission et de vérification de signaux de données non verbaux (1), qui comprend :
- une unité de commande et de contrôle (2), comprenant une mémoire de travail et un logiciel de commande et configurée pour lire et envoyer des signaux de données ;
- un serveur de base de données (3), configuré pour recevoir, enregistrer, cataloguer et transmettre des signaux de données non verbaux ;
- un serveur de sécurité (4), configuré pour enregistrer des signaux de données ;
- un service de données externe (5), configuré pour fournir des données externes au serveur de base de données (3) ;
- un module de traitement d'images (6), configuré pour traiter les images reçues et transmettre des données issues des images traitées ;
- une station d'historisation (7) destinée à lire des événements historiques du processus ; et
- un module de réception (8), configuré pour lire des paramètres à partir du serveur de base de données (3) et transmettre un signal à un afficheur de paramètres (9), dans lequel :
- le système (1) comporte deux circuits de signal indépendants et équivalents (11, 12), qui traitent respectivement :
- un signal de données principal (13) comprenant trois composantes (x1, x2, x3) provenant respectivement de l'unité de commande et de contrôle (2), du service de données externe (5) et du module de traitement d'images (6) ; et
- un signal de données supplémentaire (14) comprenant trois composantes (y1, y2, y3) provenant respectivement de l'unité de commande et de contrôle (2), du service de données externe (5) et du module de traitement d'images (6), dans lequel :
- le signal de données principal (13) présente une priorité plus élevée et une priorité d'utilisation supérieure à celles du signal de données supplémentaire (14) ; et
- un module d'intelligence artificielle (10) est utilisé pour traiter logiquement des données provenant du serveur de base de données (3), du serveur de sécurité (4) et du module de traitement d'images (6).

5. Procédé selon la revendication 4, **caractérisé en ce que** le service de données externe (5) comprend :
- un service de données externe principal (15) ; et
- un service de données externe supplémentaire (16).

6. Procédé selon la revendication 4 ou 5, **caractérisé en ce que** le signal de données principal (13) et le signal de données supplémentaire (14) sont transmis depuis la station d'historisation (7) vers un récepteur externe de données (17)**.**
